# EUROPÄISCHE PATENTSCHRIFT

(11) **EP 1 063 126 B1**
(45) Veröffentlichungstag und Bekanntmachung des Hinweises auf die Patenterteilung: **14.04.2004**
(21) Anmeldenummer: 00112575.6
(22) Anmeldetag: 14.06.2000
(51) Int. Cl.: B60R 1/06

(54) **Aussenrückspiegel mit Trockenkammer**
Exterior rearview mirror with dry chamber
Rétroviseur extérieur avec un chambre sec

(30) Priorität: 21.06.1999 DE 19928384
(43) Veröffentlichungstag der Anmeldung: 27.12.2000
(73) Patentinhaber: Donnelly Hohe GmbH & Co. KG, 97903 Collenberg (DE)
(72) Erfinder: FÜRST, Peter, 63927 BÜRGSTADT (DE); BUCHALLA, Dr. Harald, 63916 AMORBACH (DE); SCHNELLBACH,Klaus, 97896 FREUDENBERG (DE); FUCHS, Hans-Joachim, 97904 DORFPROZELTEN (DE)
(74) Vertreter: Tappe, Hartmut

(56) Entgegenhaltungen:
- EP-A- 0 331 744
- EP-A- 0 379 193
- EP-A- 0 395 052
- EP-A- 0 496 155
- DE-A- 3 914 334
- DE-A- 19 736 482
- US-A- 4 696 555

## Beschreibung

Die Erfindung betrifft einen Außenrückspiegel nach dem Oberbegriff des Patentanspruchs 1.

Moderne Außenrückspiegel von Kraftfahrzeugen werden mit einer Vielzahl von elektrischen Funktionen, wie beispielsweise elektrischen Spiegelverstellantrieben, Spiegelheizung oder Beleuchtungselementen, ausgestattet. Jede einzelne elektrische Baugruppe muß zur Herstellung der Funktion elektrisch verkabelt werden. Zur Verkabelung werden Einzeladern oder mehrere zu einem Kabelbaum zusammengefaßte Einzeladern eingesetzt. Zum Anschluß an das Bordnetz werden die Kabel vom Fahrzeuginneren in den Außenspiegel geführt und dort an den verschiedenen Baugruppen kontaktiert.

Die Funktion der elektrischen Bauteile im Außenrückspiegel ist nur dann gewährleistet, wenn das Eindringen von Feuchtigkeit in die verschiedenen elektrischen Funktionselemente ausgeschlossen ist. Besonders gefährdet vom Eindringen von Feuchtigkeit sind dabei die Kontaktstellen, an denen die Einzeladern an den Bauelementen kontaktiert werden. Da diese Kontaktstellen erst bei der Montage hergestellt werden, müssen spezielle feuchtigkeitsgeschützte Trennstellen vorgesehen werden. Üblicherweise werden dazu speziell gestaltete Steckkontakte eingesetzt, die durch entsprechend gestaltete Schutzhülsen geschützt werden, was wegen der zusätzlichen Schutzhülsen und der erschwerten Montage einen erheblichen Aufwand verursacht.

Aus der gattungsbildenden US 4,696,555 ist ein Außenrückspiegel bekannt, bei dem von einem Gehäuse und einem Gehäusedeckel eine abdichtbare Trockenkammer im Inneren des Außenspiegels gebildet wird. In dieser Trockenkammer sind elektrische Funktionselemente angeordnet, um diese vor Feuchtigkeit zu schützen.

Aus der EP 0 395 052 A1 ist ebenfalls ein Außenrückspiegel mit abdichtbarer Trockenkammer zum Schutz der elektrischen Funktionselemente bekannt, wobei in der Trennfuge der Trockenkammer eine Labyrinthdichtung angeordnet ist.

Aus der DE 39 14 334 A1 ist ebenfalls ein Außenrückspiegel mit abdichtbarer Trockenkammer bekannt, wobei Teile der Trockenkammer in die Trägerplatte des Außenrückspiegels integriert sind.

Nachteilig an den bekannten Außenspiegeln ist es, daß die im Außenspiegel eingebauten elektrischen Funktionselemente nur mit großem Aufwand verkabelt werden können.

Aufgabe der vorliegenden Erfindung ist es, einen neuen Außenrückspiegel zu liefern, der bei zuverlässigem Schutz der elektrischen Funktionselemente vor dem Eindringen von Feuchtigkeit in einfacher Weise verkabelt werden kann.

Diese Aufgabe wird durch einen Außenrückspiegel nach der Lehre des Patentanspruchs 1 gelöst.

Bevorzugte Ausführungsformen der Erfindung sind Gegenstand der Unteransprüche.

Gattungsgemäß ist im Außenrückspiegel eine abdichtbare Trockenkammer vorgesehen, in der zumindest ein elektrisches Funktionselement angeordnet werden kann. Durch die Anordnung zumindest eines elektrischen Funktionselements in der abdichtbaren Trockenkammer gemäß der vorliegenden Erfindung wird dieses elektrische Funktionselement trocken gehalten und ist vor Umwelteinflüssen, wie beispielsweise Regen, von der Fahrbahn hochgeschleudertem Schmutz und hochspritzendem Wasser, Wasser aus Waschanlagen und dergleichen, geschützt. Das heißt, in die Trockenkammer können alle feuchtigkeitsempfindlichen Funktionselemente des Außenrückspiegels, beispielsweise elektronische Bauteile oder trennbare Steckkontakte, eingebaut werden. Durch das Abdichten der Trockenkammer nach der Montage der zu schützenden Teile in der Trokkenkammer wird der Feuchtigkeitsschutz aller der in der Trockenkammer angeordneten Funktionselemente auf einmal gewährleistet, so daß Schutzmaßnahmen zum Schutz der einzelnen Funktionselemente, beispielsweise Schutzhülsen, entfallen können. Auch aufwendige Maßnahmen, die das Eindringen von Feuchtigkeit in das Gehäuse des Rückspiegels insgesamt verhindern sollen, können gegebenenfalls weitgehend entfallen, da der Feuchtigkeitsschutz für die gefährdeten Bauteile durch die Trockenkammer gewährleistet werden kann. Auch die Verwendung teurer feuchtigkeitsgeschützter Trennstellen zur Kontaktierung der einzelnen Funktionselemente kann entfallen, da die Kontaktierung mittels Kontaktstellen erfolgt, die in der Trockenkammer ausreichend vor Feuchtigkeit geschützt sind. Mit der Trockenkammer steht somit innerhalb des Außenrückspiegels ein begrenzter Raum zur Verfügung, dessen Inneres mit einfachen Mitteln vor Feuchtigkeit geschützt werden kann und der dadurch eine Vielzahl von Funktionselementen gleichzeitig vor Feuchtigkeit und Schmutz schützen kann. Weiterhin ist die Trockenkammer mit einem Zugangsdeckel versehen, wodurch das in der Trockenkammer angeordnete elektrische Funktionselement für Wartungszwecke zugänglich wird.

Welche Geometrie die Trockenkammer aufweist und aus wieviel Teilen sie zusammengesetzt ist, ist erfindungsgemäß grundsätzlich beliebig. Wichtig ist, daß die Trockenkammer aus einem Unterteil und einem daran befestigbaren Deckel zusammengesetzt ist, wodurch insbesondere ein vereinfachter Zugang zu Wartungszwecken ermöglicht wird. Der Deckel kann dabei in der Art einer Platte ausgebildet sein oder eine andere, durchaus auch dreidimensionale Geometrie aufweisen. Bei der Montage des Außenrückspiegels werden die zu schützenden Funktionselemente in das Unterteil und/oder den Deckel eingebaut und anschließend der Deckel auf dem Unterteil befestigt. Zur Befestigung des Deckels kann dieser beispielsweise zur lösbaren Befestigung festgeschraubt oder mittels mechanischer Befestigungsmittel eingeclipst oder zur unlösbaren Befestigung festgeklebt werden.

Durch die Aufteilung der Trockenkammer in einen Unterteil und einen Deckel ergibt sich eine Trennfuge zwischen Unterteil und Deckel, in der die beiden Teile aufeinander zur Anlage kommen. Bei der Gestaltung von Unterteil und Deckel ist es besonders vorteilhaft, wenn die sich daraus ergebende Trennfuge eine im wesentlichen kreisringförmige Gestalt aufweist, da eine kreisringförmige Trennfuge die Abdichtung der Trokkenkammer mit einfachen Mitteln erlaubt. Dazu kann das Unterteil beispielsweise in der Art eines auf einer Seite verschlossenen Zylinders ausgebildet sein, dessen offene Seite mit einer kreisrunden Deckplatte verschließbar ist. Abhängig von den einzubauenden elektrischen Funktionselementen kann die Trockenkammer jedoch auch jede andere Gestalt, insbesondere andere Querschnitte, aufweisen, da beispielsweise rechtekkige Querschnitte besonders günstige Befestigungsmöglichkeiten bieten.

Ein besonders zuverlässiger Schutz vor Feuchtigkeit wird dadurch erreicht, daß in der Trennfuge zwischen Deckel und Unterteil zwei verformbare Dichtelemente, angeordnet sind. Auch die Aufbringung von Dichtelementen mittels eines Dispensers ist denkbar.

Zur Versorgung der elektrischen Bauelemente im Außenrückspiegel aus dem Bordnetz werden Kabel aus dem Fahrzeuginneren in das Gehäuse des Außenrückspiegels geführt. Soweit die trennbaren Kontaktierungselemente bzw. die Kontaktstellen anderer elektrischer Funktionselemente in der Trockenkammer angeordnet sind, müssen die verschiedenen elektrischen Kabel von außen ins Innere der Trockenkammer geführt werden. Die Durchführung der Kabel durch das Gehäuse der Trockenkammer muß dabei selbstverständlich ebenfalls ausreichenden Feuchtigkeitsschutz gewährleisten. Erfindungsgemäß wird dies dadurch erreicht, daß in der Trennfuge zwischen Deckel und Unterteil zwei zumindest geringfügig verformbare Dichtelemente angeordnet sind, die beim Verschließen der Trockenkammer dichtend aufeinander zur Anlage bringbar sind. Dazu kann beispielsweise ein Dichtring am Deckel und ein Dichtring gegenüberliegend am Unterteil vorgesehen werden. Zwischen den beiden Dichtelementen kann dann ein Kabel, insbesondere ein Flachbandkabel, von außen ins Innere der Trockenkammer verlegt werden, ohne daß die Dichtheit der Trockenkammer dadurch beeinträchtigt wird. Als Material für die gegenüberliegenden Dichtungen kann ein dauerelastischer Werkstoff, beispielsweise vernetztes Silikon, und/oder ein dauerplastischer Werkstoff, beispielsweise Bitumen oder silikongetränktes Vlies, eingesetzt werden.

Bei der Montage des Deckels auf dem Unterteil werden die gegenüberliegenden Dichtelemente gegeneinandergepreßt, wobei die Viskosität der beiden Dichtelemente so gewählt ist, daß ein zwischen den Dichtungen befindliches Kabel abdichtend umschlossen wird. Besonders gut können auf diese Weise Flachbandkabel oder auch flexible Leiterplatten abgedichtet werden. Durch die Fixierung der Kabel in der Trennfuge zwischen Deckel und Unterteil wird zudem eine definierte Leitungsführung gewährleistet, so daß die Montage anderer Bauteile im Außenrückspiegel vereinfacht wird. Denn durch die definierte Leitungsführung kann ein Einquetschen der Leitungen zwischen zwei anderen Bauteilen ausgeschlossen werden.

Grundsätzlich ist es zur Gewährleistung der Dichtigkeit der Trockenkammer, um den inneren Hohlraum im wesentlichen trocken zu halten, ausreichend, wenn die Trennfuge mit einem entsprechenden Dichtelement abgedichtet wird. Falls erforderlich, kann in oder vor der Trennfuge außerhalb der Trockenkammer eine zusätzliche Labyrinthdichtung oder ein Schutzkragen vorgesehen werden. Durch diese zusätzliche Dichtung kann die Trockenkammer vor besonders stark einwirkenden Einflüssen, wie sie beispielsweise beim Einsatz von Hochdruck-Reinigungsgeräten entstehen, geschützt werden. Die Durchführung von Kabeln durch die Labyrinthdichtung bzw. an dem Schutzkragen vorbei ist unproblematisch, da die gegenüberliegenden Flächen von Deckel und Unterteil im Bereich der Labyrinthdichtung bzw. des Schutzkragens nicht aneinander zur Anlage kommen.

Selbstverständlich ist es möglich, die Trockenkammer als selbständiges Bauelement auszubilden und als solches im Inneren des Spiegelgehäuses zu montieren. Der Aufwand für die Bereitstellung verschiedener Bauteile eines Außenrückspiegels bzw. der Montageaufwand kann jedoch verringert werden, wenn der Deckel oder das Unterteil der Trockenkammer einstückig in eine Trägerplatte des Außenrückspiegels integriert ist. Derartige Trägerplatten finden in Außenrückspiegeln bei einer Vielzahl von Modellen Verwendung, wobei die Trägerplatte dem Außenrückspiegel seine mechanische Festigkeit verleiht und andere Komponenten des Außenrückspiegels, wie beispielsweise Antriebsmotoren, das Verstellgetriebe oder das Gehäuse, an der Trägerplatte befestigbar sind. Das Unterteil der Trockenkammer kann beispielsweise in die Trägerplatte integriert werden, indem eine entsprechende Vertiefung in die Trägerplatte eingearbeitet ist oder ein geschlossen umlaufender Steg auf die Trägerplatte aufgesetzt ist. Der so entstehende Raum in der Trägerplatte ist zu einer Seite offen und kann dann beispielsweise durch einen entsprechenden Deckel verschlossen werden.

Der Deckel bzw. das Unterteil der Trockenkammer kann als selbständiges Bauteil auch dadurch vorteilhaft eingespart werden, wenn der Deckel bzw. das Unterteil im wesentlichen von der Seite eines im Außenrückspiegel vorgesehenen Spiegelverstellgetriebes gebildet wird, die dem Befestigungselement zur Fixierung des Spiegelelements am Spiegelverstellgetriebe gegenüberliegt. Bei der Montage des Spiegelverstellgetriebes im Außenrückspiegel wird dieses mit der entsprechenden Seite dichtend auf dem Unterteil bzw. dem Deckel der Trockenkammer aufgesetzt, so daß die Trockenkammer nach der Befestigung des Verstellgetriebes abgedichtet ist. Besonders vorteilhaft ist es dabei selbstverständlich, wenn das Unterteil der Trockenkammer in die Trägerplatte des Außenrückspiegels integriert ist und der Deckel der Trockenkammer als eine Seite des Verstellgetriebes ausgebildet ist. Bei dieser Gestaltung entfallen zur Realisierung der erfindungsgemäßen Trockenkammer die meisten zusätzlichen Bauteile, da die Hauptfunktionselemente der Trokkenkammer, nämlich Unterteil und Deckel, in vorhandene Bauteile integriert sind. Zusätzliche Monatagevorgänge entfallen ebenfalls, da das Spiegelverstellgetriebe in jedem Fall auf der Trägerplatte befestigt werden muß.

Eine weitere Vereinfachung bei der Montage des Außenrückspiegels ergibt sich, wenn auf dem Deckel und im Inneren des Unterteils jeweils Kontaktierungselemente, insbesondere Steckkontakte, vorgesehen sind, deren Anordnung es erlaubt, bei der Montage des Deckels auf dem Unterteil die jeweils gegenüberliegenden Kontaktierungselemente zu kontaktieren. Beispielsweise kann dazu in die zur Trockenkammer gewandte Seite des Spiegelglasverstellantriebs ein mehrpoliger Steckverbinder integriert werden. Im Inneren eines in die Trägerplatte des Außenrückspiegels integrierten Unterteils wird außerdem ein funktionskomplementär ausgebildeter Steckverbinder vorgesehen. Bei der Montage des Spiegelverstellantriebs auf der Trägerplatte können dann die gegenüberliegenden Steckverbindungen ohne zusätzlichen Montageaufwand durch eine einfache Fügebewegung gleichzeitig miteinander kontaktiert werden. Durch die Anordnung innerhalb der Trockenkammer ist zudem ein ausreichender Feuchtigkeitsschutz gewährleistet. Sonstige Leitungen zum Anschluß des Spiegelverstellantriebs können somit entfallen. Damit sich die beiden Steckerhälften zuverlässig fügen lassen, ist es vorteilhaft, Zentriernasen vorzusehen, mit deren Hilfe die Fügebewegung der beiden Bauteile geführt werden kann.

Bei neuartigen Kraftfahrzeugen werden die einzelnen elektrischen Bauteile nicht mehr jeweils einzeln über separate Kabel aus dem Bordnetz angesteuert. Zur Verringerung der für die Verdrahtung des Kraftfahrzeugs erforderlichen Anzahl von Leitungen wird in diese Kraftfahrzeuge statt dessen ein Datenbussystem eingesetzt. Die Signale zur Steuerung der verschiedenen Bauteile werden dabei über eine gemeinsame Datenleitung im Fahrzeug übermittelt. Diese Steuersignale des Datenbusses werden in elektronischen Bauelementen empfangen, die die digitalen Steuerbefehle in analoge Steuersignale umsetzen, mit denen die elektrischen Bauteile angesteuert werden. Sind in einer Baugruppe wie dem Außenrückspiegel mehrere elektrische Bauelemente vorgesehen, wird vorzugsweise ein Knotenpunkt gebildet, der an das Datenbussystem des Kraftfahrzeugs angeschlossen wird. Das elektronische Bauelement, das den Knotenpunkt bildet, setzt dabei die verschiedenen digitalen Steuerbefehle aus dem Datenbus in analoge Steuersignale für mehrere elektrischen Bauteile um, die deshalb alle innerhalb des Außenspiegels mit dem Knotenpunkt kontaktiert werden müssen. Im Ergebnis entsteht dadurch innerhalb der Baugruppe eine sternförmige Struktur, in deren Mittelpunkt der Knotenpunkt liegt, von dem aus elektrische Zuleitungen zu den einzelnen elektrischen Bauteilen verlaufen. Zur einzelnen Kontaktierung der verschiedenen elektrischen Bauteile innerhalb des Außenrückspiegels mit dem Knotenpunkt ist ein erheblicher Aufwand für feuchtigkeitsgeschützte Steckverbindungen, ein hoher Montageaufwand und ein großer Platzbedarf erforderlich. Auch ist es schwierig, ein solches Konzept modular bzw. fahrzeugunabhängig auszuführen, da unterschiedliche Varianten unterschiedliche Schnittstellen benötigen. Bei Verwendung eines Datenbussystems im Kraftfahrzeug ist es deshalb besonders vorteilhaft, wenn der im Außenrückspiegel vorzusehende Knotenpunkt, das heißt das dafür vorzusehende elektronische Bauteil, im Inneren der Trockenkammer angeordnet wird. Dadurch kann das elektronische Bauteil selbst und zugleich eine Vielzahl von erforderlichen Steckverbindungen zur Kontaktierung der verschiedenen Bauteile mit dem Knotenpunkt in der Trockenkammer zuverlässig vor Feuchtigkeit geschützt werden. Die Verwendung kostenintensiver, von sich aus vor Feuchtigkeit geschützter elektronischer Bauteile kann entfallen. Falls bei einfacheren Fahrzeugvarianten ein Datenbussystem nicht eingesetzt wird, kann anstelle der Elektronikbaugruppe auch eine einfache Leiterplatte mit entsprechenden Steckverbindungen in der Trockenkammer angeordnet werden, um dadurch die Montage zu vereinfachen und einen zuverlässigen Schutz vor Feuchtigkeit zu gewährleisten.

Nachfolgend wird der Außenspiegel anhand lediglich bevorzugte Ausführungsformen darstellender Zeichnungen näher erläutert. Es zeigt:
- **Fig. 1**: einen Außenrückspiegel mit Spiegelverstellgetriebe in perspektivischer Ansicht;
- **Fig. 2**: den Außenspiegel gemäß **Fig. 1** in einer zweiten perspektivischen Ansicht;
- **Fig. 3**: eine erste Ausführungsform einer Trennfuge einer erfindungsgemäßen Trockenkammer im Querschnitt;
- **Fig. 4**: eine zweite Ausführungsform einer Trennfuge einer erfindungsgemäßen Trockenkammer im Querschnitt;
- **Fig. 5**: eine dritte Ausführungsform einer Trennfuge einer erfindungsgemäßen Trockenkammer im Querschnitt.

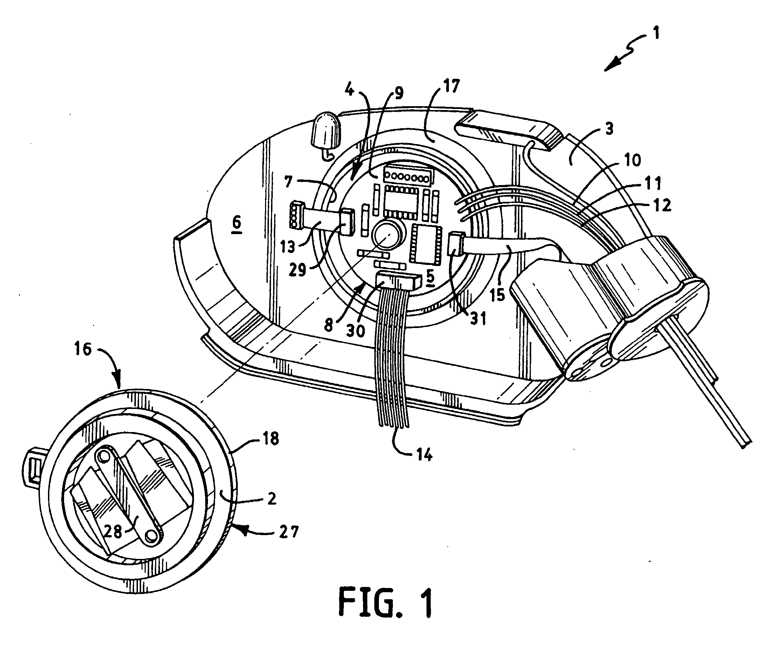

**Fig. 1** zeigt einen Außenrückspiegel 1 mit einem Spiegelverstellgetriebe 2 in perspektivischer Ansicht. Zur besseren Erkennbarkeit sind von dem Außenrückspiegel 1 die Glasbaugruppe, das Gehäuse und der Spiegelfuß nicht dargestellt. Die unterschiedlichen Komponenten des Außenrückspiegels 1 können auf einer Trägerplatte 3 montiert werden. Die Mitte der Trägerplatte 3 ist dabei als Unterteil 4 einer Trockenkammer 5 ausgebildet. Zur Schaffung des Unterteils 4 der Trockenkammer 5 ist in der Grundebene 6 der Trägerplatte 3 eine Vertiefung vorgesehen, so daß das Unterteil 4 der Trockenkammer 5 zur Seite hin von einem kreisförmig umlaufenden Steg 7 und nach unten hin von einem verdeckt dargestellten Boden 8 begrenzt wird.

Nach oben hin ist die Trockenkammer 5 zunächst offen, so daß ein Elektronik-Busmodul 9 in das Unterteil 4 der Trockenkammer 5 eingebracht und auf dessen Boden 8 befestigt werden kann. Das Elektronik-Busmodul 9 wird mittels der Versorgungsleitungen 10 und 11 mit Antriebsstrom und über die Datenleitung 12 mit digitalen Steuerbefehlen aus einem Datenbussystem des Kraftfahrzeuges versorgt. Die digitalen Steuerbefehle werden im Elektronik-Busmodul 9, das als Knotenpunkt des Datenbussystems ausgebildet ist, in analoge elektrische Stellsignale umgesetzt und über die Steckkontakte 29, 30 und 31 und die Flachbandkabel 13, 14 und 15 an die verschiedenen teilweise nicht dargestellten elektrischen Bauelemente im Außenrückspiegel weitergeleitet.

Nach der Montage der Flachbandkabel 13, 14 und 15, deren Steckverbindung zum Elektronik-Busmodul 9 nicht feuchtigkeitsgeschützt ausgebildet sind, wird das Spiegelverstellgetriebe 2 mit dessen Unterseite 16, die dem Befestigungselement 28 zur Fixierung eines nicht dargestellten Spiegelelements am Spiegelverstellgetriebe 2 gegenüberliegt und somit den Deckel 27 der Trockenkammer 5 bildet, auf der Trägerplatte 3 montiert.

Zur Abdichtung der Trockenkammer 5 ist an der Trägerplatte 3 und an dem Spiegelverstellantrieb 2 jeweils ein Flächendichtring 17 und 18 vorgesehen. Bei der Befestigung des Spiegelverstellantriebs 2 auf der Trägerplatte 3 kommen die beiden Flächendichtringe 17 und 18 aufeinander zur Anlage und dichten die Trockenkammer 5 damit ab. Die Kabel 10, 11, 12, 13, 14 und 15 verlaufen zwischen den beiden Flächendichtringen 17 und 18 von außen ins Innere der Trockenkammer 5.

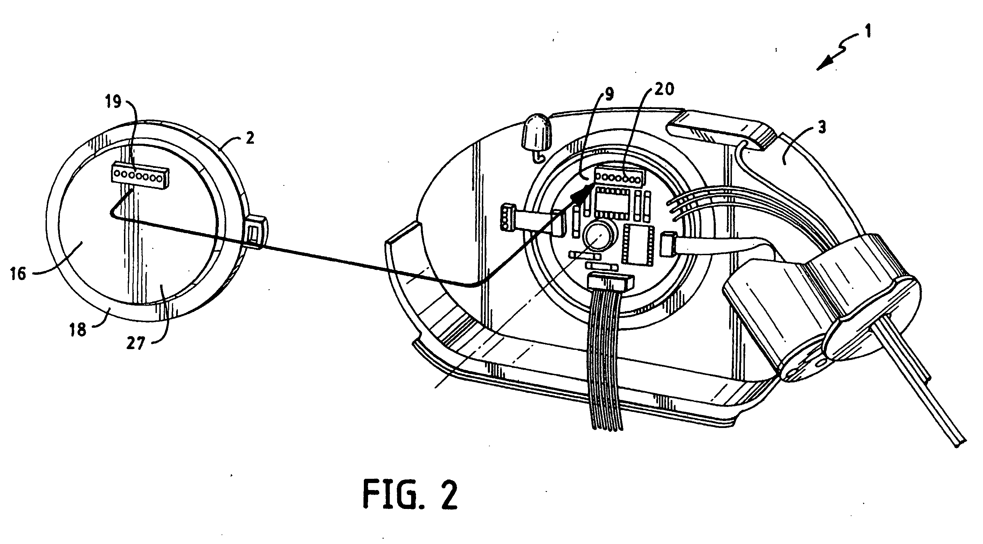

**Fig. 2** zeigt den Außenrückspiegel 1 mit der Trägerplatte 3, der Trockenkammer 5 und dem Spiegelverstellantrieb 2, dessen Unterseite 16 in **Fig. 2** in einer Frontalansicht erkennbar ist. In dieser Darstellung erkennt man, daß auf der Unterseite 16 des Spiegelverstellantriebs 2 eine Stekkerleiste 19 angeordnet ist. Diese Steckerleiste 19 wird während der Fügebewegung zur Befestigung des Spiegelverstellantriebs 2 auf der Trägerplatte 3 mit einer Steckerleiste 20 auf dem Elektronik-Busmodul 9 kontaktiert. Im Ergebnis wird dadurch die elektrische Kontaktierung der im Spiegelverstellantrieb 2 vorgesehene Antriebsmotoren und Stellungssensoren ohne die Verlegung zusätzlicher Kabel durch einfache Befestigung des Spiegelverstellantriebs 2 auf der Trägerplatte 3 ermöglicht.

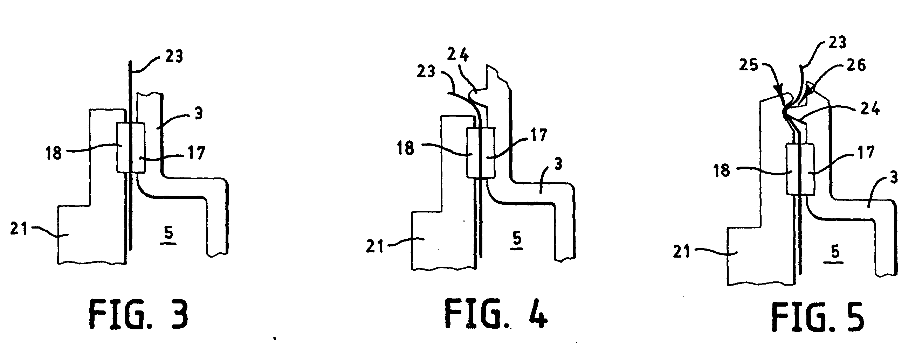

**Fig. 3, Fig. 4** und **Fig. 5** zeigen verschiedene Ausführungsformen zur Gestaltung der Dichtfuge zwischen der Trägerplatte 3 und einem Deckel 21. Zur Abdichtung der Trockenkammer 5 bei gleichzeitiger Durchführung von Kabeln 23 sind zwischen der Trägerplatte 3 und dem Deckel 21 jeweils zwei Flächendichtringe 17 und 18 vorgesehen. Die Abdichtung gemäß der Ausführungsform in **Fig. 3** weist keine weiteren Dichtelemente auf. Bei der Ausführungsform gemäß **Fig. 4** ist zusätzlich zu den Flächendichtringen 17 und 18 ein Schutzkragen 24 vorgesehen, um die direkte Einwirkung eines Flüssigkeitsstrahls auf die Dichtringe 17 und 18 auszuschließen.

Eine noch bessere Dichtwirkung kann durch die Ausführungsform gemäß **Fig. 5** erreicht werden, die dazu eine Labyrinthdichtung 26 aufweist. Die Labyrinthdichtung 26 wird dabei zum Beispiel vom Schutzkragen 24 und einer formkomplementären Vertiefung 25 im Deckel 21 gebildet.

## Patentansprüche

1. Außenrückspiegel (1) für ein Kraftfahrzeug, mit einem Spiegelelement, einem Gehäuse, und einem Spiegelfuß, der am Kraftfahrzeug befestigbar ist, wobei im Außenrückspiegel (1) zumindest ein elektrisches Funktionselement (9, 19, 20, 29, 30, 31), insbesondere ein Kontaktierungselement, vorgesehen ist, und wobei im Außenrückspiegel (1) eine abdichtbare Trockenkammer (5) mit Deckel (27) und Unterteil (4) vorgesehen ist, in der das elektrische Funktionselement (9, 19, 20, 29, 30, 31) angeordnet ist.
**dadurch gekennzeichnet,**
**dass** in der Trennfuge zwischen Deckel (27) und Unterteil (4) zwei zumindest geringfügig verformbare Dichtelemente (17, 18) angeordnet sind, die bei verschlossener Trockenkammer (5) dichtend aufeinander anliegen, wobei nach der Montage der Trockenkammer zwischen den beiden Dichtelementen (17, 18) zumindest ein von außen ins Innere der Trockenkammer (5) führendes Kabel (10, 11, 12, 13, 14, 15), insbesondere ein Flachbandkabel (13, 14, 15) verlegt ist.

2. Außenrückspiegel nach Anspruch 1,
**dadurch gekennzeichnet,**
**daß** die Trockenkammer (5) im wesentlichen aus dem Unterteil (4), das die Trockenkammer (5) von unten und/oder von den Seiten begrenzt, und dem Deckel (27), der die Trockenkammer (5) von oben und/oder von den Seiten begrenzt, gebildet wird, wobei der Deckel (27) abdichtend auf dem Unterteil (4) befestigbar ist.

3. Außenrückspiegel nach Anspruch 2,
**dadurch gekennzeichnet,**
**daß** die Trennfuge zwischen Deckel (27) und Unterteil (4) eine im wesentlichen kreisringförmige Gestalt aufweist.

4. Außenrückspiegel nach einem der Ansprüche 1 bis 3,
**dadurch gekennzeichnet,**
**daß** die in der Trennfuge zwischen Deckel (27) und Unterteil (4) angeordneten Dichtelemente (17, 18) als Dichtringe, ausgebildet sind.

5. Außenrückspiegel nach einem der Ansprüche 1 bis 4,
**dadurch gekennzeichnet,**
**daß** in oder vor der Trennfuge außerhalb der Trockenkammer (5) eine Labyrinthdichtung (26) oder ein Schutzkragen (24) vorgesehen ist.

6. Außenrückspiegel nach einem der Ansprüche 1 bis 5,
**dadurch gekennzeichnet,**
**daß** das Unterteil (4) oder der Deckel (27) der Trockenkammer (5) einstückig in eine Trägerplatte (3) des Außenrückspiegels (1) integriert ist, auf der verschiedene Funktionselemente des Außenrückspiegels (1) befestigbar sind.

7. Außenrückspiegel nach einem der Ansprüche 1 bis 6,
**dadurch gekennzeichnet,**
**daß** der Deckel (27) oder das Unterteil (4) der Trockenkammer (5) im wesentlichen von der Seite (16) eines Spiegelverstellgetriebes (2) gebildet wird, die dem Befestigungselement (28) zur Fixierung eines Spiegelelements am Spiegelverstellgetriebe (2) gegenüberliegt.

8. Außenrückspiegel nach einem der Ansprüche 1 bis 7,
**dadurch gekennzeichnet,**
**daß** auf dem Deckel (27) und im Inneren des Unterteils (4) jeweils zumindest ein Kontaktierungselement, insbesondere ein Steckkontakt (19, 20), in der Weise angeordnet ist, daß bei der Montage des Dekkels (27) auf dem Unterteil (4) die gegenüberliegenden Kontaktierungselemente (19, 20) kontaktierbar sind.

9. Außenrückspiegel nach einem der Ansprüche 1 bis 8,
**dadurch gekennzeichnet,**
**daß** im Inneren der Trockenkammer (5) ein elektronisches Bauelement (9) angeordnet ist, das einen Knotenpunkt eines Datenbussystems im Kraftfahrzeug bildet, und von dem aus verschieden Funktionselemente im Außenrückspiegel ansteuerbar sind.

## Claims

1. An outside rear view mirror (1) for a motor vehicle, comprising a mirror element, a housing and a mirror foot fastenable to the motor vehicle, whereby at least one electrical function element (9, 19, 20, 29, 30, 31), in particular a contacting element, is provided in the outside rear view mirror (1), and whereby in the outside rear view mirror (1) a sealable chamber (5) with lid (27) and bottom part (4) is provided, in which the electrical function element (9, 19, 20, 29, 30, 31) is disposed,
**characterised in that**
disposed in the parting line between lid (27) and bottom part (4) are two at least slightly deformable sealing elements (17, 18) which in the closed state of the sealable chamber (5) are applied sealingly one against the other, wherein after assembly of the sealable chamber at least one cable (10, 11, 12, 13, 14, 15) running from outside into the interior of the sealable chamber (5), in particular a ribbon cable (13, 14, 15), is installed between the two sealing elements (17, 18).

2. An outside rear view mirror according to claim 1,
**characterised in that**
the sealable chamber (5) is formed substantially by the bottom part (4), which delimits the sealable chamber (5) at the base and/or sides, and the lid (27), which delimits the sealable chamber (5) at the top and/or sides, wherein the lid (27) is fastenable in a sealing manner on the bottom part (4).

3. An outside rear view mirror according to claim 2,
**characterised in that**
the parting line between lid (27) and bottom part (4) is substantially annular in shape.

4. An outside rear view mirror according to one of claims 1 to 3,
**characterised in that**
the sealing elements (17, 18) disposed in the parting line between lid (27) and bottom part (4) are designed as sealing rings.

5. An outside rear view mirror according to one of claims 1 to 4,
**characterised in that**
a labyrinth seal (26) or a protective collar (24) is provided in or in front of the parting line outside of the sealable chamber (5).

6. An outside rear view mirror according to one of claims 1 to 5,
**characterised in that**
the bottom part (4) or the lid (27) of the sealable chamber (5) is integrated integrally in a carrier plate (3) of the outside rear view mirror (1), to which carrier plate various function elements of the outside rear view mirror (1) are fastenable.

7. An outside rear view mirror according to one of claims 1 to 6,
**characterised in that**
the lid (27) or the bottom part (4) of the sealable chamber (5) is formed substantially by the side (16) of a mirror-adjusting mechanism (2), which side lies opposite the fastening element (28) for fixing a mirror element to the mirror-adjusting mechanism (2).

8. An outside rear view mirror according to one of claims 1 to 7,
**characterised in that**
on the lid (27) and in the interior of the bottom part (4) in each case at least one contacting element, in particular a plug-in contact (19, 20), is disposed in such a way that, when the lid (27) is mounted on the bottom part (4), the opposing contacting elements (19, 20) are contactable.

9. An outside rear view mirror according to one of claims 1 to 8,
**characterised in that**
disposed in the interior of the sealable chamber (5) is an electronic component (9), which forms a nodal point of a data bus system in the motor vehicle and from which various function elements in the outside rear view mirror may be activated.

## Revendications

1. Rétroviseur extérieur (1) pour un véhicule automobile, comportant un élément de miroir, un boîtier et un pied de miroir, qui peut être fixé sur le véhicule automobile, au moins un élément fonctionnel électrique (9, 19, 20, 29, 30, 31), en particulier un élément de connexion, étant prévu dans le rétroviseur extérieur (1), et une chambre sèche (5) pouvant être rendue étanche, comportant couvercle (27) et pièce de base (4), étant prévue dans le rétroviseur extérieur (1), l'élément fonctionnel électrique (9, 19, 20, 29, 30, 31) étant disposé dans cette chambre sèche,
**caractérisé en ce que**,
dans l'interstice de séparation entre le couvercle (27) et la pièce de base (4), sont disposés deux éléments d'étanchéité (17, 18) déformables au moins légèrement, qui, lorsque la chambre sèche (5) est fermée, reposent de façon étanche l'un sur l'autre, au moins un câble conducteur (10, 11, 12, 13, 14, 15) passant de l'extérieur dans l'intérieur de la chambre sèche, en particulier un câble formé d'une bande plate (13, 14, 15), étant posé entre les deux éléments d'étanchéité (17, 18) après le montage de la chambre sèche.

2. Rétroviseur extérieur suivant la revendication 1, **caractérisé en ce que** la chambre sèche (5) est formée essentiellement par la pièce de base (4), qui limite la chambre sèche (5) vers le bas et/ou vers les côtés, et par le couvercle (27), qui limite la chambre sèche (5) vers le haut et/ou vers les côtés, le couvercle (27) pouvant être fixé de façon étanche sur la pièce de base (4).

3. Rétroviseur extérieur suivant la revendication 2, **caractérisé en ce que** l'interstice de séparation entre le couvercle (27) et la pièce de base (4) est conçu en forme essentiellement d'anneau circulaire.

4. Rétroviseur extérieur suivant l'une des revendications 1 à 3, **caractérisé en ce que** les éléments d'étanchéité (17, 18), disposés dans l'interstice de séparation entre le couvercle (27) et la pièce de base (4), sont réalisés comme bagues d'étanchéité.

5. Rétroviseur extérieur suivant l'une des revendications 1 à 4, **caractérisé en ce qu'**un joint à labyrinthe (26) ou une collerette de protection (24) sont prévus dans l'interstice de séparation, ou avant lui, en dehors de la chambre sèche (5).

6. Rétroviseur extérieur suivant l'une des revendications 1 à 5, **caractérisé en ce que** la pièce de base (4) ou le couvercle (27) de la chambre sèche (5) sont intégrés, en formant une seule pièce, dans une plaque support (3) du rétroviseur extérieur (1), plaque sur laquelle sont fixés différents éléments fonctionnels du rétroviseur extérieur (1).

7. Rétroviseur extérieur suivant l'une des revendications 1 à 6, **caractérisé en ce que** le couvercle (27) ou la pièce de base (4) de la chambre sèche (5) sont essentiellement formés par la paroi (16) d'un entraînement de réglage du miroir (2), cette paroi étant située en vis-à-vis de l'élément de fixation (28) destiné à fixer un élément de miroir sur l'entraînement de réglage (2) du miroir.

8. Rétroviseur extérieur suivant l'une des revendications 1 à 7, **caractérisé en ce que**, sur le couvercle (27) et à l'intérieur de la pièce de base (4), est chaque fois disposé au moins un élément de contact, en particulier un contact par enfichage (19, 20), de telle façon que, lors du montage du couvercle (27) sur la pièce de base (4), le contact entre les éléments de contact (19, 20) situés en vis-à-vis puisse être établi.

9. Rétroviseur extérieur suivant l'une des revendications 1 à 8, **caractérisé en ce qu'**à l'intérieur de la chambre sèche (5), est disposé un composant électronique (9), qui forme un noeud d'un système de bus de données dans le véhicule automobile, et par lequel peuvent être commandés différents éléments fonctionnels situés dans le rétroviseur extérieur.
